# EUROPEAN PATENT APPLICATION

(11) **EP 4 823 084 A1**
(43) Date of publication of application: **14.10.2026**
(21) Application number: 26168617.4
(22) Date of filing: 27.03.2026
(51) Int. Cl.: H04N 1/387, H04N 1/00, H04N 1/38, H04N 1/04, H04N 1/23, H04N 1/203

(54) **IMAGE PROCESSING APPARATUS, IMAGE PROCESSING METHOD AND IMAGE PROCESSING PROGRAM FOR IDENTITY CARD COPY WITH WHITE PAGE PROCESSING**

(30) Priority: 07.04.2025 JP 2025063034
(71) Applicant: KYOCERA Document Solutions Inc., Osaka-shi, Osaka 540-8585 (JP)
(72) Inventor: YABUUCHI, Yasuyuki, Osaka-shi, Osaka, 540-8585 (JP)
(74) Representative: Viering, Jentschura & Partner mbB Patent- und Rechtsanwälte

(57) **Abstract**

An image processing apparatus (1) includes at least one processor (100) and at least one memory resource (110). The memory resource (110) stores therein a program (115) that causes an ID card scanning function for generating a 2-in-1 image by scanning front and back sides of an ID card (300) to be performed, a program (116) that causes a blank page detecting function to be performed, setting information (112) regarding a blank-page skip function, setting information (113) regarding a transmission size of an image, and setting information (114) regarding whether a layout of the image includes a blank region. The processor (100) generates image data of the ID card (300) when the blank-page skip function is enabled and when a process of scanning the ID card (300) including a side corresponding to a blank page is performed. The image data has a layout that differs depending on a setting of the transmission size and a setting regarding whether the blank region is included.

## Description

### Field

The present disclosure relates to an image processing apparatus, an image processing method, and an image processing program.

### Background

There is an image processing apparatus, such as a scanner including an image reading function, that includes an ID card scanning function. Examples of the ID card scanning function include a function to crop an image of a scanned ID card to generate an image of only a portion of the ID card, and a function to generate a 2-in-1 image obtained by putting images of front and back sides of the scanned ID card together.

Further, there is an image processing apparatus that includes a blank-page skip function. The blank-page skip function is a function to detect a blank page in a result of scanning a document and to omit storage and output of an image.

Note that, in general, a technology is known that is related to cropping performed to accurately cut a portion of a document out of image data obtained by reading front and back sides of the document.

### Summary

An image processing apparatus according to an embodiment of the present disclosure includes at least one processor and at least one memory resource. The memory resource stores therein a first program, a second program, setting information regarding a blank-page skip function, setting information regarding a transmission size of an image, and setting information regarding whether there is a blank region in a layout of the image. The first program causes the processor to perform an ID card scanning function to generate a 2-in-1 image by scanning front and back sides of an ID card. The second program causes the processor to perform a blank page detecting function. The blank-page skip function is a function to exclude a blank page included in a result of the scanning from pages to be stored and output. The transmission size of the image is a transmission size of an image generated on the basis of the scanning. Due to the first and second programs being executed, the processor generates image data of the ID card when the blank-page skip function is enabled and when a process of scanning the ID card including a side corresponding to a blank page is performed, where the image data has a layout that differs depending on a setting of the transmission size and a setting regarding whether there is the blank region.

### Brief Description of Figures

Fig. 1 illustrates an example of an internal configuration of an image processing apparatus;
Fig. 2 illustrates an example of an electrical-connection-related configuration of the image processing apparatus;
Fig. 3 illustrates an example of a schematic configuration of a controller;
Fig. 4A illustrates an example of a relationship between an on-placement state of an ID card and a generated 2-in-1 image;
Fig. 4B illustrates an example of the relationship between the on-placement state of the ID card and the generated 2-in-1 image;
Fig. 5A illustrates another example of the relationship between the on-placement state of the ID card and the generated 2-in-1 image;
Fig. 5B illustrates another example of the relationship between the on-placement state of the ID card and the generated 2-in-1 image;
Fig. 6 is a flowchart of an example of an ID card scanning process performed by the image processing apparatus;
Fig. 7 is a flowchart of an example of an image generating process;
Fig. 8A illustrates an example of a relationship between the on-placement state of the ID card and a 2-in-1 image including a blank page;
Fig. 8B illustrates an example of the relationship between the on-placement state of the ID card and the 2-in-1 image including a blank page;
Fig. 9A illustrates an example of the relationship between the on-placement state of the ID card and the 2-in-1 image including a blank page;
Fig. 9B illustrates an example of the relationship between the on-placement state of the ID card and the 2-in-1 image including a blank page;
Fig. 10A illustrates an example of an image generated by removing a blank page from a scanning result;
Fig. 10B illustrates an example of an image generated by removing a blank page from a scanning result;
Fig. 11A illustrates an example of a 2-in-1 image including a blank page; and
Fig. 11B illustrates an example of a 2-in-1 image including a blank page;
Fig. 12A illustrates an example of image data obtained by arranging, in a region substantially half the standardized size, an image of a side of the ID card that is not a side corresponding to a blank page; and
Fig. 12B illustrates an example of image data obtained by arranging, in the region substantially half the standardized size, an image of a side of the ID card that is not the side corresponding to a blank page.

### Detailed Description

It is conceivable that, when a blank-page skip function is set to be enabled (to be in an ON state), a user could want an image of a scanning result to include no blank pages. On the other hand, when the skip function is enabled and when an ID card including a side corresponding to a blank page is scanned, the user may be thinking of acquiring a 2-in-1 image of front and back sides even when the side corresponding to a blank page is included. Alternatively, the user may be thinking of removing a portion of the side corresponding to a blank page from a 2-in-1 image of a standardized size. However, it is uncertain what kind of image layout the user actually wants to acquire. The generation of an image undesired by the user may result in a reduction in usability. Thus, there are demands for providing an image processing apparatus that makes it possible to set an image layout desired by a user.

In view of the circumstances described above, the present disclosure improves the usability by generating image data desired by a user when the blank-page skip function is enabled and when an ID card is scanned.

Hereinafter, embodiments of the present disclosure will be described with reference to the drawings.

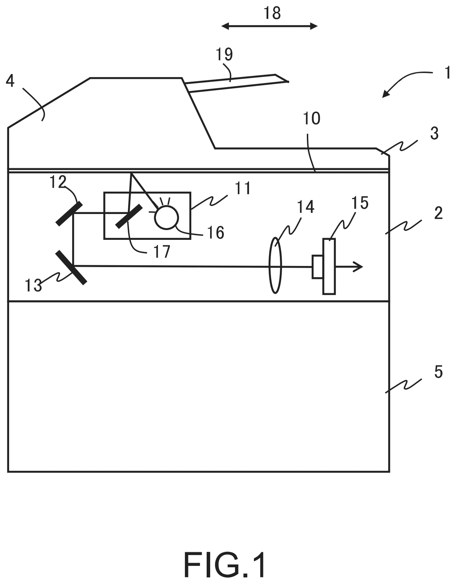

Fig. 1 illustrates an example of an internal configuration of an image processing apparatus 1 according to the present embodiment. The image processing apparatus 1 according to the present embodiment is a multifunctional device that includes, for example, an image reading function, a facsimile function, and an image forming function. Note that the image processing apparatus 1 is not limited to the multifunctional device, and examples of the image processing apparatus 1 may include a scanner apparatus, a printer, and a facsimile apparatus that include image reading functions.

Further, the image processing apparatus 1 of the present embodiment includes a blank-page skip function and an ID card scanning function, and performs processes corresponding to the respective functions. Note that the functions and the processes will be described in detail later.

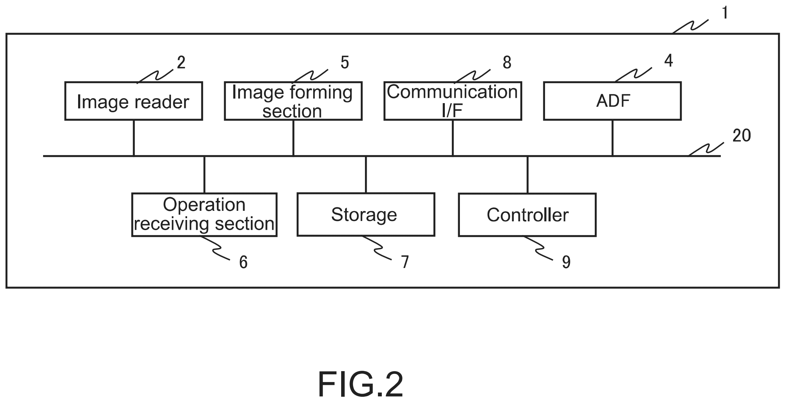

Fig. 2 illustrates an example of an electrical-connection-related configuration of the image processing apparatus 1. A schematic configuration of the image processing apparatus 1 is described with reference to Figs. 1 and 2. As illustrated in these figures, the image processing apparatus 1 includes an image reader 2, a document cover 3, an automatic document feeder (hereinafter referred to as an ADF in some cases) 4, an image forming section 5, an operation receiving section 6 (refer to Fig. 2), a communication interface (I/F) section 8 (refer to Fig. 2), and a controller 9 (refer to Fig. 2).

The image reader 2 performs an image reading process to read a document to obtain image data. As illustrated in Fig. 1, the image reader 2 includes, for example, a contact glass 10, a reading unit 11, a mirror 12, a mirror 13, an optical lens 14, and a charge-coupled device (CCD) 15.

The reading unit 11 includes a light-emitting-diode (LED) light source 16 and a mirror 17, and can be moved in a secondary scanning direction 18 (in a right-and-left direction in Fig. 1) by a movement mechanism (not illustrated) in which a drive motor such as a stepping motor is used. Further, when the reading unit 11 is moved by the drive motor in the secondary scanning direction 18, light irradiated by the LED light source 16 toward the contact glass 10 provided on an upper surface of the image reader 2 is scanned in the secondary scanning direction 18.

When the light is irradiated by the LED light source 16, reflected light reflected off a document or a back surface of the document cover 3 is reflected off the mirror 17 toward the mirror 12. The light reflected off the mirror 17 is guided by the mirrors 12 and 13 to the optical lens 14. The optical lens 14 collects the incident light and causes the incident light to be incident on the CCD 15.

The CCD 15 is a photoelectrically converting element that converts the received light into an electric signal (voltage) corresponding to a light amount (the brightness intensity) of the received light, and that outputs the electric signal to the controller 9. The controller 9 performs image processing on the electric signal received from the CCD 15 to generate image data of the document. Note that an example in which the CCD 15 is used as an imaging device is described in the present embodiment. However, a reading mechanism using a contact image sensor (CIS) having a shorter focal length than the CCD 15 may be applied instead of application of a reading mechanism using the CCD 15.

The document cover 3 is pivotally provided to the image reader 2. The contact glass 10 provided on the upper surface of the image reader 2 is open and closed by the document cover 3 being operated pivotally. A pivoting support of the document cover 3 is provided with an open cover detecting sensor (not illustrated) such as a limit switch. When a user opens the document cover 3 to cause a document to be read to obtain an image of the document, the open cover detecting sensor operates and a detection signal (an open-cover detection signal) for the detection is output to the controller 9.

Here, the image reader 2 reads a document to obtain an image of the document by the following procedure. First, a document is placed on the contact glass 10, and then the document cover 3 is operated to be in a closed position. Thereafter, when the operation receiving section 6 inputs an instruction to perform image reading, the LED light source 16 irradiates pieces of light successively while the reading unit 11 is being moved to the right in the secondary scanning direction 18. Then, reflected light coming from the document or the back surface of the document cover 3 is guided to the CCD 15 through the mirrors 17, 12, and 13 and the optical lens 14, and pieces of light-amount data respectively corresponding to amounts of light received by the CCD 15 are output to the controller 9 successively. When the controller 9 obtains light-amount data for the entirety of a region irradiated with light, the controller 9 performs processing on the obtained light-amount data to generate image data of the document from the light-amount data. The image data is image data making up a rectangular image.

Note that the document cover 3 is provided with the ADF 4. Using a plurality of transportation rollers, the ADF 4 successively transports at least one document set on a document setting portion 19, and moves the document such that the document passes through an auto document reading position to the right in the secondary scanning direction 18, where the auto document reading position is a position determined on the contact glass 10. When the document is moved by the ADF 4, the reading unit 11 is arranged under the auto document reading position, and an image of the document during movement is obtained by the document being read by the reading unit 11 at this position. The document setting portion 19 is provided with a mechanical document detection sensor (not illustrated) that can output a contact signal. When a document is set on the document setting portion 19, the document detection sensor operates and a detection signal (a document detection signal) for the detection is output to the controller 9.

Further, as illustrated in Fig. 1, the image forming section 5 is an electrophotographic image forming device that performs an image forming process (a printing process) on the basis of image data obtained by performing reading by the image reader 2 or on the basis of a printing job input by an information processing apparatus such as an external personal computer through the communication I/F section 8. The image forming section 5 performs the image forming process by a specified procedure with respect to a printing sheet of paper supplied from a sheet cassette (not illustrated), and prints a print target on the printing sheet of paper. Note that it is only required that the image forming process be performed by a known procedure using a known structural element such as a photoconductor drum or a toner container. Thus, a detailed description thereof is omitted.

Further, as illustrated in Fig. 2, the image reader 2, the ADF 4, and the image forming section 5 are connected to the operation receiving section 6, the storage 7, the communication I/F section 8, and the controller 9 through a data bus 20 such that mutual data input and output can be performed.

The communication I/F section 8 is an interface that performs data communication with an external apparatus connected through a communication network such as the Internet or a local area network (LAN). The storage 7 includes, for example, a nonvolatile memory such as a hard disc drive (HDD) or a solid state drive (SSD) .

The operation receiving section 6 includes a display section and an operation section (neither section is illustrated). The display section includes, for example, a color liquid crystal display, and displays thereon various information to a user who is operating the operation receiving section 6. The operation section includes, for example, various push button keys that are arranged adjacently to the display section, and a touchscreen sensor that is arranged on a display screen of the display section, and receives input of an instruction given by a user of the image processing apparatus 1. Further, when an operation is performed on the operation receiving section 6 in order to perform at least one of an image reading operation or an image forming operation, an operation signal for the operation is output from the operation receiving section 6 to the controller 9.

### Schematic Configuration of Controller

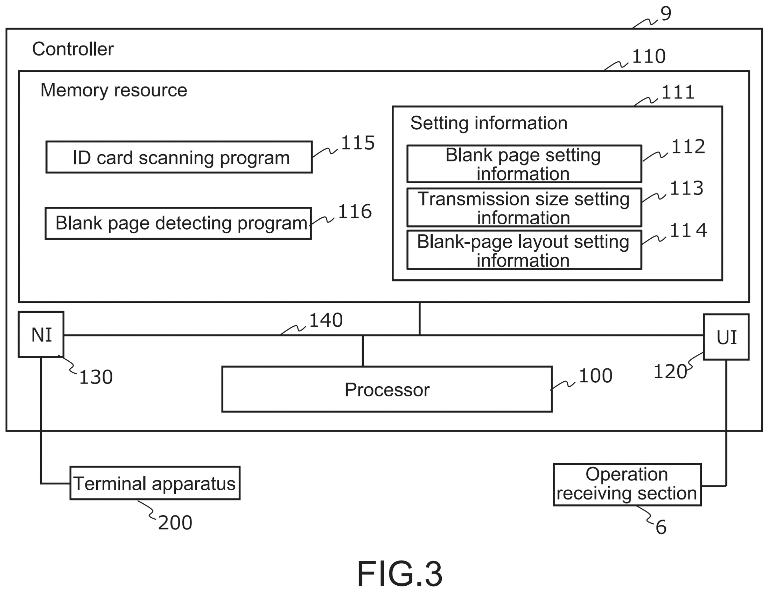

Fig. 3 illustrates an example of a schematic configuration of the controller 9. The controller 9 performs various processes to perform various functions of the image processing apparatus 1. As illustrated in the figure, the controller 9 includes a processor 100, a memory resource 110, a user interface device (UI) 120, and a network interface device (NI) 130, and these devices (or units) are communicably connected to each other through a bus 140.

The processor 100 is a computational apparatus that reads various programs stored in the memory resource 110 to perform processes corresponding to the respective programs. Note that examples of the processor 100 include a microprocessor, a central processing unit (CPU), a field programmable gate array (FPGA), and other semiconductor devices that can perform computation.

The memory resource 110 is a storage apparatus that stores therein various information. Specifically, examples of the memory resource 110 include nonvolatile and volatile storage media such as a random access memory (RAM) and a read only memory (ROM). Note that the memory resource 110 may be, for example, a rewritable storage medium such as a flash memory, a hard disk, or an SSD; a Universal Serial Bus (USB) memory; or a memory card. Further, the memory resource 110 may be a storage medium different from the storage 7 described above, or may be the same storage medium as the storage 7.

The UI 120 is an interface that acquires instruction information provided by a user and output to the controller 9 through the operation receiving section 6. The NI 130 is an interface that acquires the instruction information transmitted to the controller 9 from a terminal apparatus 200 used by the user through a specified communication network such as a LAN or the Internet. Note that the NI 130 may be implemented by the communication I/F section 8 described above, or the controller 9 may include the NI 130 individually.

Further, it is assumed that, in the following description, information communication between the controller 9 and each of the operation receiving section 6 and the terminal apparatus 200 is performed through a corresponding one of the UI 120 and the NI 130, unless otherwise specified. Further, on the basis of a specified program (not illustrated) stored in the memory resource 110, the controller 9 performs a process, such as the image reading process described above, that is to be essentially performed by the image processing apparatus.

### Setting Information 111

As illustrated in Fig. 3, the memory resource 110 includes setting information 111, an ID card scanning program (a first program) 115, and a blank page detecting program (a second program) 116.

The setting information 111 includes blank page setting information 112, transmission size setting information 113, and blank-page layout setting information 114. Setting information regarding a blank-page skip function is registered as the blank page setting information 112. Note that the blank-page skip function is a function to detect a blank page in a result of scanning a document and to omit storage and output of an image (a function to exclude a blank page from data to be stored and output), as described above. When the blank-page skip function is set to be "enabled" on the basis of a user operation, the processor 100 reads the blank page detecting program 116. In response to this, the controller 9 operates in a blank-page skip mode.

Note that, when the blank-page skip function is set to be "disabled", the controller 9 operates in a specified mode other than the blank-page skip mode. Even when the scanning result includes a blank page, the blank page is dealt with as a storage-and-output target without being excluded.

The transmission size setting information 113 is setting information regarding dimensions of a document (a document size) when data obtained by scanning is transmitted by email or to, for example, the cloud or a file server. In other words, the "size" used herein does not refer to a data size (a data amount) but to dimensions of a scanned document.

Note that examples of the type of transmission size settable include "same as document size" and standardized sizes including "A3" and "A4." When "same as document size" is set to be the transmission size, the controller 9 generates image data having the same dimensions as (an actual size of) a scanned document. For example, when an ID card is scanned, the controller 9 generates image data having the same dimensions as the ID card (actual dimensions of the ID card without being enlarged or reduced).

Further, for example, when "A4" is set to be the transmission size, the controller 9 generates image data arranged at a specified position (such as the center, or an upper portion / lower portion with right alignment / left alignment) in a region of an A4 sheet size, where the image data has the same dimensions as a scanned document or dimensions obtained by the scanned document being enlarged or reduced at a specified magnification based on user settings.

The blank-page layout setting information 114 is setting information regarding whether there is a blank region in a layout of a generated image. Specifically, the blank-page layout setting information 114 is setting information regarding a blank-region-related layout of image data generated when a blank-page skip function is enabled, an ID card including a side corresponding to a blank page is scanned in an ID card scanning mode, and a standardized size is set to be a transmission size. Note that the types of settings include "including blank page" and "not including blank page." Note that a specific process to generate image data using the blank-page layout setting information 114 will be described later.

For example, the settings for these pieces of information can be performed by a user through the terminal apparatus 200 connected through the operation receiving section 6 or the NI 130.

Note that, when a user scans an ID card including a side corresponding to a blank page in a state in which the blank-page skip function is enabled, the user changes the layout of generated image data on the basis of a setting of a transmission size. Specifically, when a blank page is not desired to be included in an image generated by scanning an ID card, a user sets "same as document size" as the transmission size. On the other hand, when the use wants to acquire image data of a desired standardized size even if a blank page is included, the user sets, as the transmission size, the desired standardized size such as A4.

In other words, a user sets "same as document size" as the transmission size when the user prioritizes avoiding including a blank page in generated images of an ID card, and the user sets, as the transmission size, a standardized size such as "A4" when the user prioritizes generating an image of a desired standardized size.

### ID Card Scanning Program 115

The ID card scanning program 115 is a program that causes the processor 100 to perform a process to perform an ID card scanning function. When the processor 100 receives, in response to a user operation, an instruction to perform the ID card scanning function, the processor 100 reads the ID card scanning program 115. In response to this, the controller 9 operates in an ID card scanning mode.

Specifically, as described above, the processor 100 having read the ID card scanning program 115 generates an image of only a portion of an ID card such as a driver's license by removing a background portion other than the portion of the ID card from an image generated on the basis of scanning, and generates a 2-in-1 image obtained by putting images of front and back sides of the ID card together in a region of a preset transmission size. Further, the ID card scanning function is not limited to generating a 2-in-1 image, and includes other functions such as automatically correcting a shift or inclination of, for example, a read position. Note that such image processing can be performed on the basis of a known approach of table (platen) cropping.

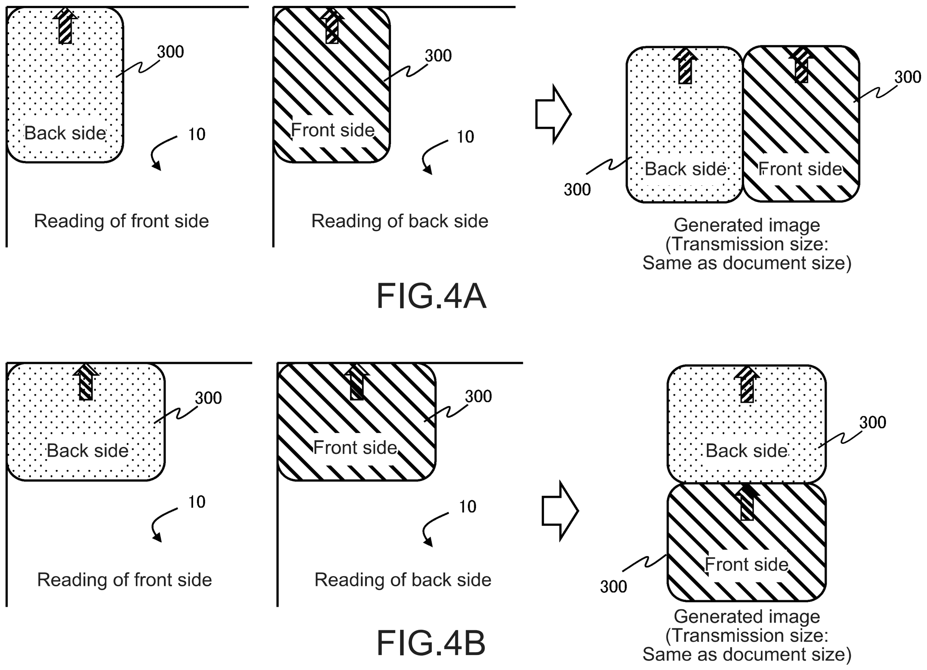

Figs. 4A and 4B illustrate examples of a relationship between an on-placement state of an ID card and a generated 2-in-1 image. When a reading process (scanning) is performed on two sides of an ID card 300 placed on the contact glass 10, as illustrated in the figures, the controller 9 generates a 2-in-1 image having a specified layout corresponding to a state in which the ID card 300 is placed. Note that Fig. 4A illustrates a 2-in-1 image having a layout (horizontal arrangement) created when the ID card 300 placed in a longitudinally long state is scanned. Further, Fig. 4B illustrates a 2-in-1 image having a layout (vertical arrangement) created when the ID card 300 placed in a laterally long state is scanned.

Further, "same as document size" is set to be the transmission size in the example illustrated in the figure. Thus, the controller 9 generates a 2-in-1 image having dimensions of a total of two sides that are front and back sides of the ID card 300.

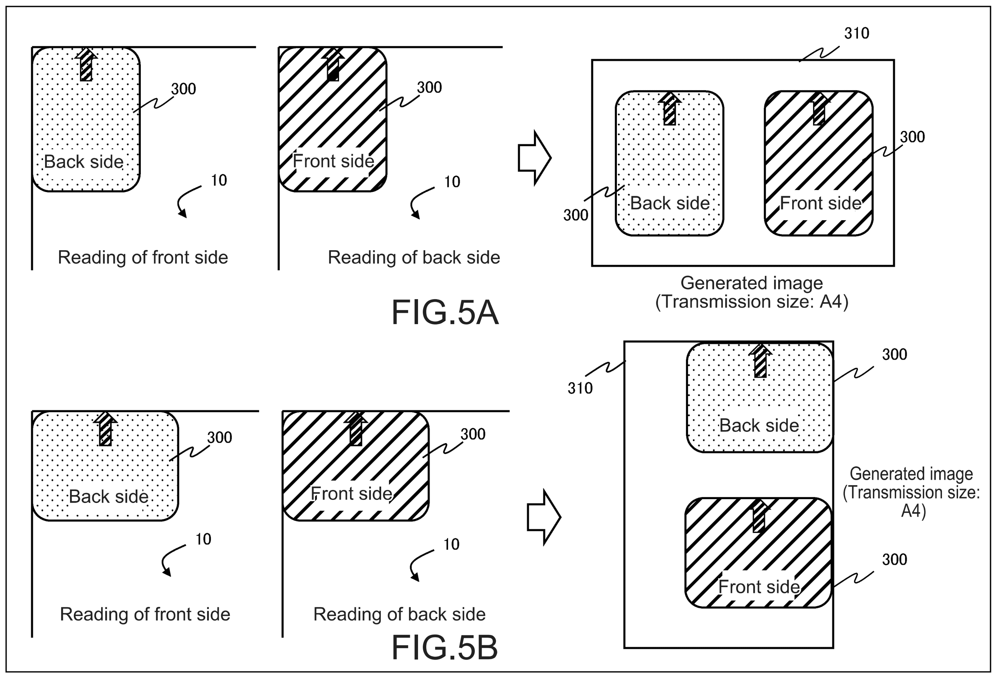

Figs. 5A and 5B illustrate other examples of the relationship between the on-placement state of the ID card and the generated 2-in-1 image. The figures illustrate examples of a 2-in-1 image when a standardized size of "A4" is set to be the transmission size. In this case, the controller 9 generates a 2-in-1 image having a layout in which scanned two sides of the ID card 300 are arranged in a region 310 of the set transmission size in a specified state. Note that Fig. 5A illustrates a 2-in-1 image having a layout (horizontal arrangement / the arrangement position: center) created when the ID card 300 placed in a longitudinally long state is scanned. Further, Fig. 5B illustrates a 2-in-1 image having a layout (vertical arrangement / the arrangement position: an upper portion with right alignment) created when the ID card 300 placed in a laterally long state is scanned. Note that it is only required that information regarding the arrangement position of an image in the region 310 be stored in the memory resource 110 on the basis of user settings (not illustrated).

### Blank Sheet Detecting Program 116

Returning to Fig. 3 to continue the description. The blank page detecting program 116 is a program that causes the processor 100 to perform a process to perform a blank page detecting function. Specifically, for example, the processor 100 having read the blank page detecting program 116 analyzes an image generated on the basis of scanning and detects, as a blank page, an image having an image brightness value larger than a specified threshold.

Further, the processor 100 having read the blank page detecting program 116 may detect, as a blank page, an image generated by scanning a side of the ID card that includes a small number of words occupying a specified area or less, or only ruled lines. Note that, as in the case described above, it is only required that a method based on a brightness value of an image generated by scanning be adopted as such a method of detecting, as a blank page, a side including a small number of words or only ruled lines.

### ID Card Scanning Process

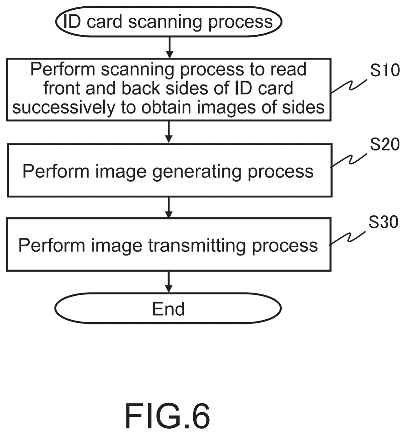

Fig. 6 is a flowchart of an example of an ID card scanning process performed by the image processing apparatus 1. For example, the process is started by the controller 9 when an instruction to perform an ID card scanning function is received from a user through the operation receiving section 6 or the NI 130.

When the process is started, the controller 9 performs a scanning process to successively read front and back sides of the ID card 300 placed on the contact glass 10 to obtain images of the sides (Step S10).

Further, the controller 9 performs a process of generating an image of the scanned front and back sides of the ID card 300 (Step S20). Specifically, the controller 9 generates an image of dimensions according to a transmission size set in the transmission size setting information 113.

Furthermore, the controller 9 performs a process of transmitting the image generated in Step S20 (Step S30). Specifically, the controller 9 transmits generated image data of the ID card 300 to a preset specified apparatus (such as the terminal apparatus 200 used by the user). Further, the controller 9 terminates processing of the flowchart when transmitting the image data.

### Details of Image Generating Process

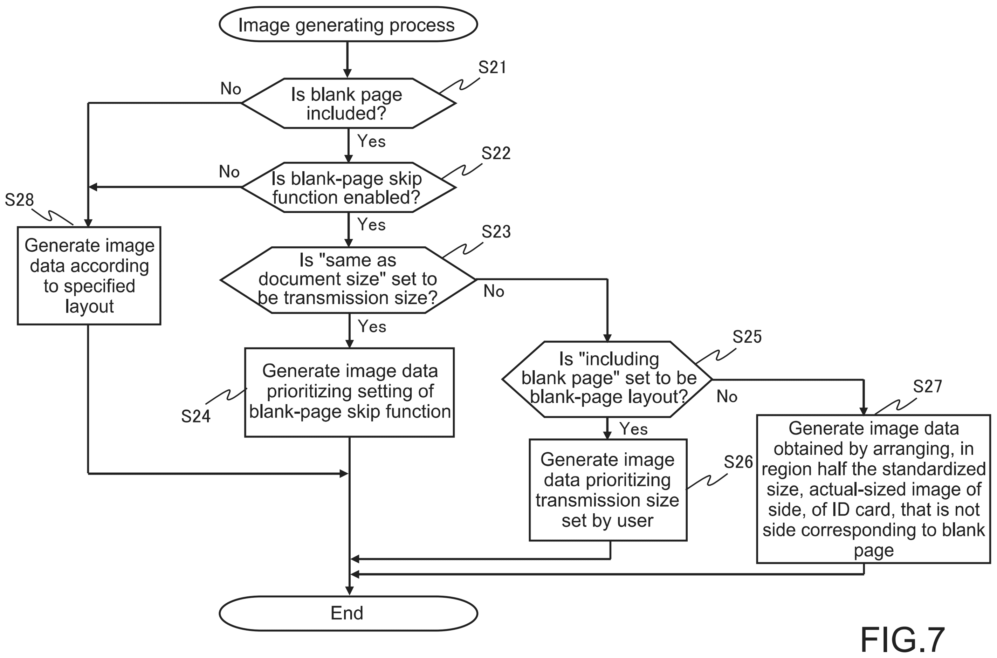

Fig. 7 is a flowchart of an example of an image generating process corresponding to Step S20. First, the controller 9 determines whether an image generated on the basis of scanning includes a blank page, that is, whether at least one of two sides of the ID card 300 is a side corresponding to a blank page (Step S21). Specifically, the processor 100 reads to execute the blank page detecting program 116 in the sequence of the ID card scanning program 115, and determines whether the image generated on the basis of scanning includes a blank page.

Then, when the controller 9 has determined that a blank page is included (Yes in Step S21), the controller 9 moves the process on to Step S22. On the other hand, when the controller 9 has determined that a blank page is not included (No in Step S21), the controller 9 moves the process on to Step S26.

In Step S22, the controller 9 determines whether a blank-page skip function is enabled. Specifically, the controller 9 determines whether the function is enabled by referring to the blank page setting information 112.

Then, when the controller 9 has determined that the blank-page skip function is enabled (Yes in Step S22), the controller 9 moves the process on to Step S23. On the other hand, when the controller 9 has determined that the blank-page skip function is not enabled (No in Step S22), the controller 9 moves the process on to Step S28.

Note that, in Step S28, the controller 9 generates an image based on scanning according to a specified layout. Specifically, when the process of Step S28 is performed subsequently to the process of Step S21, the controller 9 generates a 2-in-1 image having the layout illustrated in Fig. 4A, 4B, 5A, or 5B.

More specifically, the controller 9 checks the transmission size setting information 113 regarding the document. When "same as document size" is set, the controller 9 generates a 2-in-1 image having the layout illustrated in Fig. 4A or 4B. On the other hand, when a standardized size such as "A4" is set in the transmission size setting information 113, the controller 9 generates a 2-in-1 image having the layout illustrated in Fig. 5A or 5B.

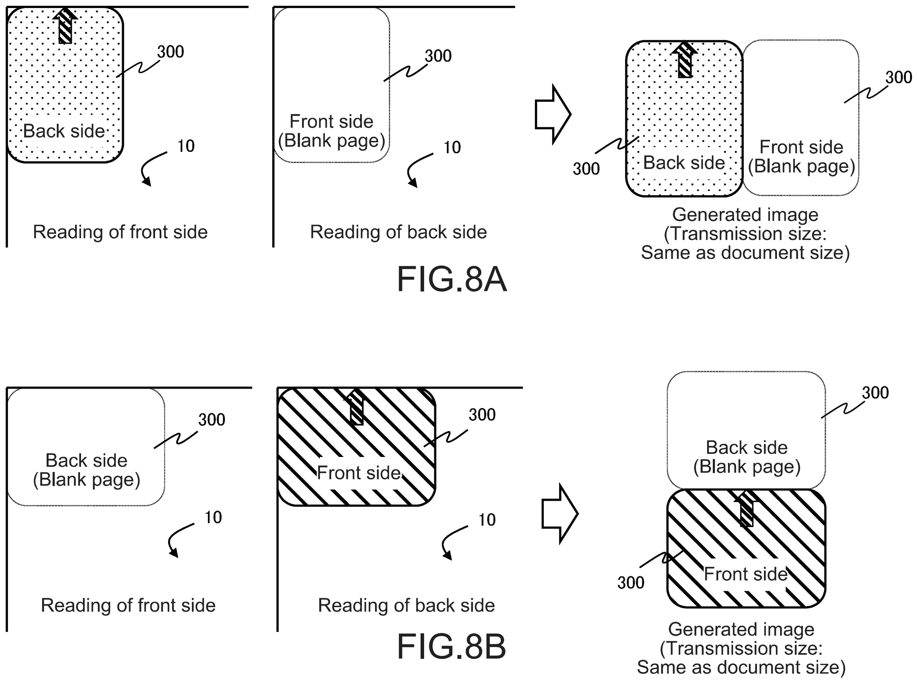

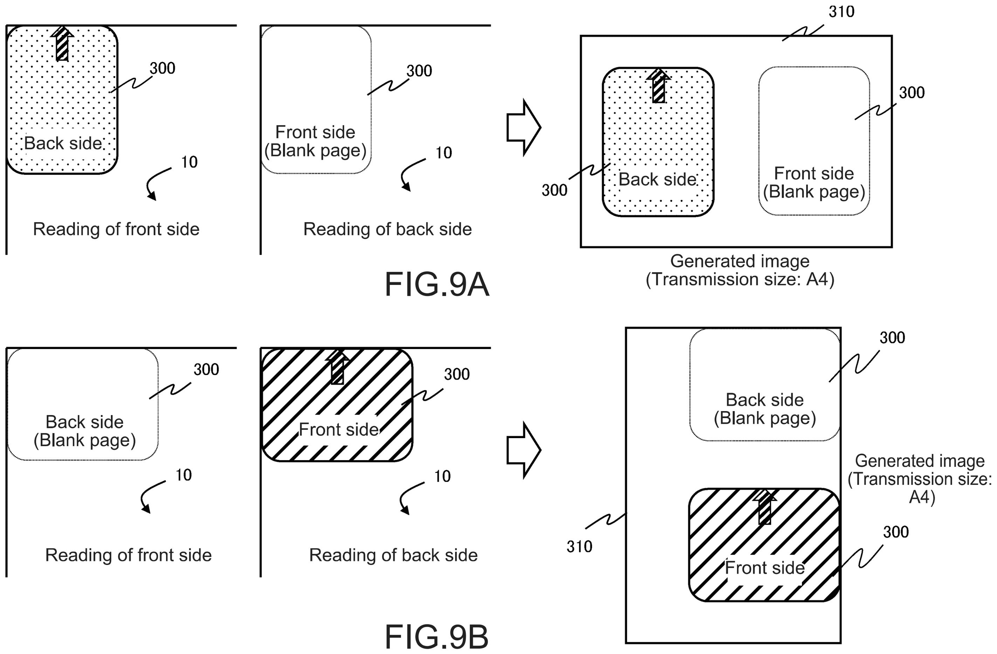

Further, when the process of Step S26 is performed subsequently to the process of Step S22, the controller 9 generates a 2-in-1 image having a layout illustrated in Fig. 8A, 8B, 9A, or 9B. In this case, the blank-page skip function is disabled. Thus, it can be considered that the user intends to generate a 2-in-1 image including a blank page. Thus, the controller 9 generates a 2-in-1 image including a blank page, on the basis of the transmission size set in the transmission size setting information 113 regarding the document.

Note that Figs. 8A and 8B illustrate examples of a relationship between the on-placement state of the ID card and a 2-in-1 image including a blank page, and Figs. 9A and 9B illustrate examples of the relationship between the on-placement state of the ID card and the 2-in-1 image including a blank page. Note that the 2-in-1 images illustrated in Figs. 8A and 8B are examples when "same as document size" is set to be the transmission size. Further, the 2-in-1 images illustrated in Figs. 9A and 9B are examples when the standardized size such as "A4" is set to be the transmission size.

Returning to Fig. 7 to continue the description. The process moves on to Step S23 when the controller 9 has determined, in Step S22, that the blank-page skip function is enabled in Step S22, and, in Step S23, the controller 9 refers to the transmission size setting information 113 and determines whether "same as document size" is set to be the transmission size. Then, when the controller 9 has determined that "same as document size" is set to be the transmission size (Yes in Step S23), the controller 9 moves the process on to Step S24. On the other hand, when the controller 9 has determined that "same as document size" is not set to be the transmission size (No in Step S23), that is, when a standardized size such as A4 that is specified by the user is set to be the transmission size, the controller 9 moves the process on to Step S25.

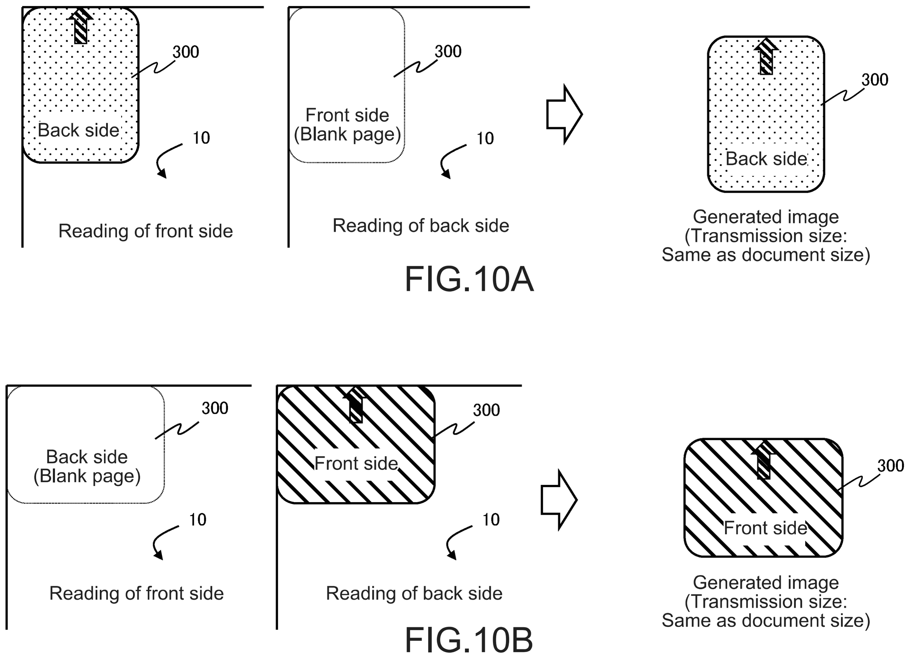

In the process of Step S24, the controller 9 generates an image prioritizing a setting of the blank-page skip function, that is, an image that includes no blank pages. Figs. 10A and 10B illustrate examples of images generated in such a case.

Figs. 10A and 10B illustrate examples of images generated by removing blank pages from scanning results. In this case, "same as document size" is set to be the transmission size, and this setting indicates that the user wants no blank pages to be included in a generated image. Thus, the controller 9 generates image data of an image having an actual size of a side of the ID card that is not a side corresponding to a blank page, as illustrated in the figures.

On the other hand, the controller 9 determines, in Step S25, whether "including blank page" is set in the blank-page layout setting information 114. Then, when the controller 9 has determined that "including blank page" is set (Yes in Step S25), the controller 9 moves the process on to Step S26. Further, when the controller 9 has determined that "including blank page" is not set (No in Step S25), that is, when "not including blank page" is set in the blank-page layout setting information 114, the controller 9 moves the process on to Step S27.

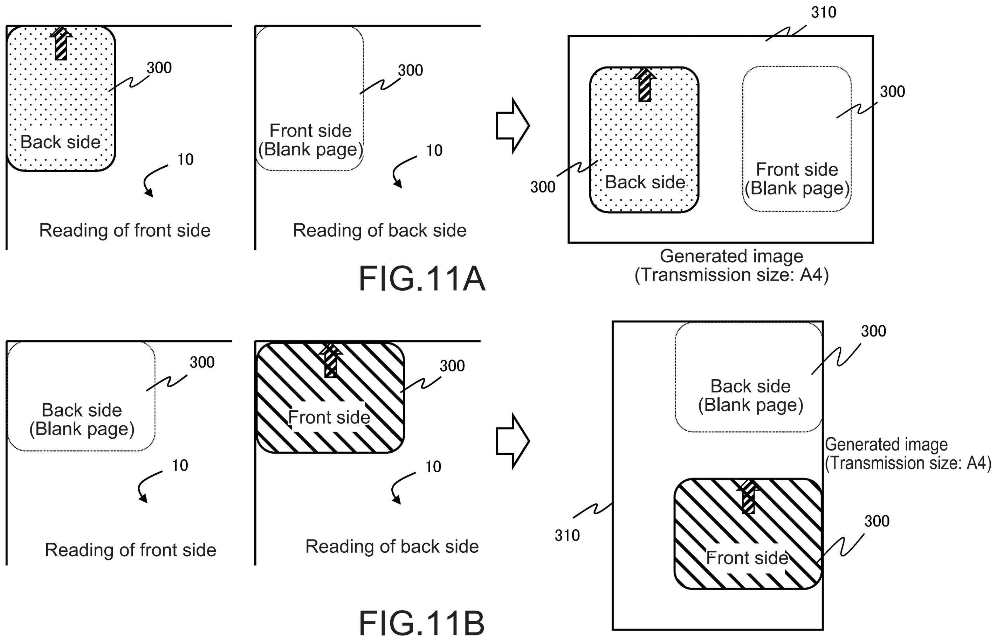

In the process of Step S26, the controller 9 generates an image prioritizing the transmission size set by the user, that is, a 2-in-1 image that includes a blank page included in a scanning result. Figs. 11A and 11B illustrate examples of images generated in such a case.

Figs. 11A and 11B illustrate examples of 2-in-1 images including blank pages. In this case, a standardized size such as "A4" is set to be the transmission size, and further, "including blank page" is set in the blank-page layout setting information 114. In other words, this setting indicates that the user wants a 2-in-1 image of a standardized size to be generated even if a blank page is included. Thus, the controller 9 generates a 2-in-1 image in which an actual-sized image of a side of the ID card that corresponds to a blank page, and an actual-sized image of a side of the ID card that is not the side corresponding to a blank page are arranged at a specified position (the center in Fig. 11A and an upper portion with right-alignment in Fig. 11B) in the region of the set standardized size.

On the other hand, the controller 9 generates, in Step S27, image data obtained by arranging (placing), in a region half the standardized size, an actual-sized image of a side of the ID card that is not the side corresponding to a blank page, where "half the standardized size" includes "substantially half", which means including a specified error range.

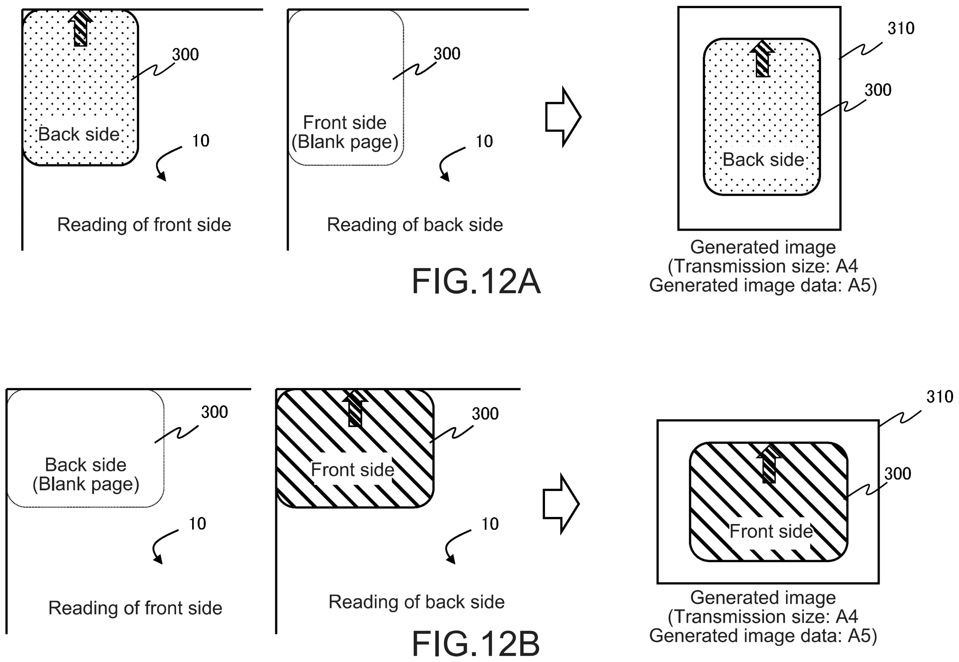

Figs. 12A and 12B illustrate examples of image data obtained by arranging, in a region half the standardized size, an actual-sized image of a side of the ID card that is not the side corresponding to a blank page. In particular, Fig. 12A illustrates an example of image data obtained when the ID card placed in a longitudinally long state is scanned, and Fig. 12B illustrates an example of image data obtained when the ID card placed in a laterally long state is scanned. These pieces of image data are generated by arranging, at a specified position (the center in each of the illustrated examples) in a region (A5) half the standardized size (for example, A4) set by a user, an actual-sized image of a side of the scanned ID card that is not the side corresponding to a blank page.

Note that, when the controller 9 performs the process of Step S24, S26, or S27, the controller 9 terminates the flowchart of the image generating process. The process moves on to the image transmitting process (Step S30), and a generated image is transmitted to an apparatus desired by the user.

The ID card scanning process and the image generating process have been described above.

The image processing apparatus 1 described above makes it possible to generate image data expected by a user when the blank-page skip function is enabled and when an ID card is scanned. This results in being able to improve the usability.

In particular, when a standardized size is set to be the transmission size and when an ID card including a side corresponding to a blank page is scanned, the image processing apparatus 1 generates a 2-in-1 image including an image of the side corresponding to a blank page. In such specifications, it is assumed that there is a user who wants a 2-in-1 image to include no side corresponding to a blank page. Thus, when the blank-page skip function is enabled, an ID card including a side corresponding to a blank page is scanned, and a standardized size is set to be a transmission size, the image processing apparatus 1 generates image data obtained by removing an image region of an image of a side corresponding to a blank page from a 2-in-1 image of the standardized size. This enables the image processing apparatus 1 to generate image data expected by the user. This results in being able to improve the usability.

Note that the embodiments described above may be provided by an image processing method including performing, by the image processing apparatus 1, image processing such as ID card scanning, an image processing program that causes the controller 9 to perform a process including performing processing procedures included in the image processing, or a computer-readable recording medium that has recorded therein the image processing program.

Although the embodiments of the present disclosure have been described above, of course the present disclosure is not limited to the embodiments described above, and various modifications may be made thereto.

## Claims

1. An image processing apparatus (1), comprising:
at least one processor (100); and
at least one memory resource (110), wherein
the memory resource (110) stores therein
a first program (115) that causes the processor (100) to perform an ID card scanning function to generate a 2-in-1 image by scanning front and back sides of an ID card (300),
a second program (116) that causes the processor (100) to perform a blank page detecting function,
setting information (112) regarding a blank-page skip function to exclude a blank page included in a result of the scanning from pages to be stored and output,
setting information (113) regarding a transmission size of an image generated on a basis of the scanning, and
setting information (114) regarding whether there is a blank region in a layout of the image, and
due to the first and second programs (115, 116) being executed, the processor (100) generates image data of the ID card (300) when the blank-page skip function is enabled and when a process of scanning the ID card (300) including a side corresponding to a blank page is performed, the image data having a layout that differs depending on a setting of the transmission size and a setting regarding whether there is the blank region.

2. The image processing apparatus (1) according to claim 1, wherein
when a standardized size is set to be the transmission size and when the setting regarding whether there is the blank region is a setting that allows a blank page to be included, the processor (100) generates image data obtained by arranging, in a region (310) of the standardized size, an image obtained by scanning the side corresponding to a blank page, and an image obtained by scanning one of the sides of the ID card (300) that is not the side corresponding to a blank page.

3. The image processing apparatus (1) according to claim 1, wherein
when a standardized size is set to be the transmission size and when the setting regarding whether there is the blank region is a setting that does not allow a blank page to be included, the processor (100) generates image data obtained by arranging, in a region (310) substantially half the standardized size, an image obtained by scanning one of the sides of the ID card (300) that is not the side corresponding to a blank page.

4. The image processing apparatus (1) according to claim 2 or 3, wherein
on a basis of information received from a user, the processor (100) determines an arrangement position of the image obtained by the scanning, the arrangement position being in a region (310) substantially half the standardized size.

5. The image processing apparatus (1) according to claim 1, wherein
the processor (100) generates the image data of the ID card (300), the image data having a layout that differs depending on whether a standardized size or a size other than the standardized size is set to be the transmission size.

6. The image processing apparatus (1) according to claim 5, wherein
when the size other than the standardized size is set to be the transmission size, the processor (100) generates an image of an actual size of the ID card (300) as the image data, the generated image being obtained by scanning one of the sides of the ID card (300) that is not the side corresponding to a blank page.

7. An image processing method that is performed by an image processing apparatus (1) that includes at least one processor (100) and at least one memory resource (110),
the memory resource (110) storing therein
a first program (115) that causes the processor (100) to perform an ID card scanning function to generate a 2-in-1 image by scanning front and back sides of an ID card (300),
a second program (116) that causes the processor (100) to perform a blank page detecting function,
setting information (112) regarding a blank-page skip function to exclude a blank page included in a result of the scanning from pages to be stored and output,
setting information (113) regarding a transmission size of an image generated on a basis of the scanning, and
setting information (114) regarding whether there is a blank region in a layout of the image, the image processing method comprising
due to the first and second programs (115, 116) being executed, generating, by the processor (100), image data of the ID card (300) when the blank-page skip function is enabled and when a process of scanning the ID card (300) including a side corresponding to a blank page is performed, the image data having a layout that differs depending on a setting of the transmission size and a setting regarding whether there is the blank region.

8. An image processing program that causes a computer (9) to perform a process to perform an ID card scanning function, the computer (9) including at least one processor (100) and at least one memory resource (110),
the memory resource (110) storing therein
a first program (115) that causes the processor (100) to perform an ID card scanning function to generate a 2-in-1 image by scanning front and back sides of an ID card (300),
a second program (116) that causes the processor (100) to perform a blank page detecting function,
setting information (112) regarding a blank-page skip function to exclude a blank page included in a result of the scanning from pages to be stored and output,
setting information (113) regarding a transmission size of an image generated on a basis of the scanning, and
setting information (114) regarding whether there is a blank region in a layout of the image,
the image processing program including the first and second programs (115, 116), the process comprising
generating, by the processor (100), image data of the ID card (300) when the blank-page skip function is enabled and when a process of scanning the ID card (300) including a side corresponding to a blank page is performed, the image data having a layout that differs depending on a setting of the transmission size and a setting regarding whether there is the blank region.
